# EUROPÄISCHE PATENTSCHRIFT

(11) **EP 0 480 232 B1**
(45) Veröffentlichungstag und Bekanntmachung des Hinweises auf die Patenterteilung: **17.01.1996**
(21) Anmeldenummer: 91116203.0
(22) Anmeldetag: 24.09.1991
(51) Int. Cl.: F16M 11/06, H04N 7/14

(54) **Elektronische Objektkamera**
Electronic camera
Caméra électronique

(30) Priorität: 08.10.1990 DE 9013986 U
(43) Veröffentlichungstag der Anmeldung: 15.04.1992
(73) Patentinhaber: Alcatel SEL Aktiengesellschaft, D-70435 Stuttgart (DE)
(72) Erfinder: Garcia-Victoria, Carlos, W-7146 Tamm (DE); Schaffrina, Jörg, W-6000 Frankfurt/Main (DE); Frick, Gerhard, W-7531 Oelbronn (DE); Gaissert, Heinz, W-7534 Birkenfeld (DE)
(74) Vertreter: Pohl, Herbert, Dipl.-Ing

(56) Entgegenhaltungen:
- DE-U- 8 902 287
- DE-U- 9 013 986
- DE-U- 9 110 664
- FR-A- 2 382 140
- US-A- 3 089 028
- US-A- 4 258 387

## Beschreibung

Die Erfindung betrifft elektronische Objektkameras mit einem Gehäuse, das jeweils mittels eines um eine waagerechte Achse drehbaren Gelenkes an einem Ständer befestigt ist.

Aus der FR-A-2 382 140 ist eine Aufnahmekamera mit einem Ständer bekannt, wobei die Kamera auf einem U-förmigen Bügel befestigt ist, der an einem weiteren Bügel hängend um eine waagerechte Achse schwenkbar und mit Klemmschrauben feststellbar ist. Der zweite Bügel ist um eine senkrechte Achse drehbar an einem System von Armen oder Hebeln angebracht, dessen letzter an einem vertikalen Holm endet. Der Holm steht auf einem Fuß mit zwei halbkreisförmigen Auslegern, die mit Rollen ausgerüstet sind, um den Ständer verfahren zu können.

Das deutsche Geschmacksmuster M 89 01 635 zeigt zwei Ausführungen elektronischer Objektkameras für Bildtelefone, bei denen das Gehäuse der Kamera jeweils um eine waagerechte Achse drehbar zwischen zwei parallelen Ständerholmen an deren oberem Ende angebracht ist. Unten enden die Ständerholme an einem Fuß mit Bedien- und Anzeigeelementen für die Kamera. Die elektrischen Leitungen sind von der Kamera oben in die hohlen Ständerholme eingeführt und laufen darin unsichtbar nach unten. Bei der einen Ausführung besteht der Fuß aus einem die Ständerholme verbindenden Gehäuseteil, das an einer Drehscheibe befestigt ist, die z.B. in einem Tisch eingebaut ist. Bei der anderen Ausführung ist der Fuß ein transportables Gehäuse zum Abstellen auf einer Tischfläche. Die Kamera kann um ihre waagerechte Drehachse geschwenkt werden, so daß das Objektiv entweder vertikal auf Dokumente gerichtet werden kann, die unter der Kamera auf dem Tisch liegen, oder horizontal auf eine Person oder auf Gegenstände an einer Wand. Die aufgenommenen Bilder werden mit üblichen Bildfernsprechsystemen zu anderen Teilnehmern übermittelt.

Der Erfindung liegt die Aufgabe zugrunde, die Konstruktion der Objektkamera und ihrer Halterung zu verbessern und damit ihre Handhabung zu vereinfachen. Gelöst wird diese Aufgabe durch die im Anspruch 1 angegebenen Merkmale. Weitere Lösungen sind in den Ansprüchen 4 und 5 angegeben. Vorteilhafte Weiterbildungen sind den Unteransprüchen zu entnehmen. Die vorgeschlagenen Lösungen haben den Vorteil, daß das Einstellen der Kamera mit einer Hand erfolgen kann. Die Ausrichtung ist universell, d.h. die Kamera kann nahezu in alle Richtungen eingestellt werden. Außerdem ist der Platzbedarf auf einem Tisch gering. Mehrere Ausführungen können ohne Demontage weggeräumt werden, wenn dies gewünscht wird, weil der Standfuß nicht festgemacht werden muß. Bei einer Ausführung kann der handelsübliche Lampen-Tragarm (Hebelgetriebe) am Tisch angeklemmt oder angeschraubt werden. Er erlaubt ebenfalls eine freie Höhen- und Positionsbestimmung der Kamera.

Die Erfindung wird an Ausführungsbeispielen beschrieben, die in den zugehörigen Zeichnungen dargestellt sind. Darin zeigen:
- Fig. 1 bis 3: eine elektronische Objektkamera mit zylindrischem Gehäuse, doppelrohrigem Ständerholm und halbzylindrischem Fuß in Seitenansicht, Vorderansicht und Draufsicht;
- Fig. 4: eine andere Ausführung der Objektkamera mit quaderförmigem Gehäuse und bekanntem Ständer, in perspektivischer Ansicht;
- Fig. 5 bis 7: eine weitere Ausführung der Objektkamera mit doppelrohrigem Ständer, Schwenkarm und plattenförmigem Fuß zum Unterschieben unter ein Bildwiedergabegerät in Seitenansicht, Rückansicht und Draufsicht.

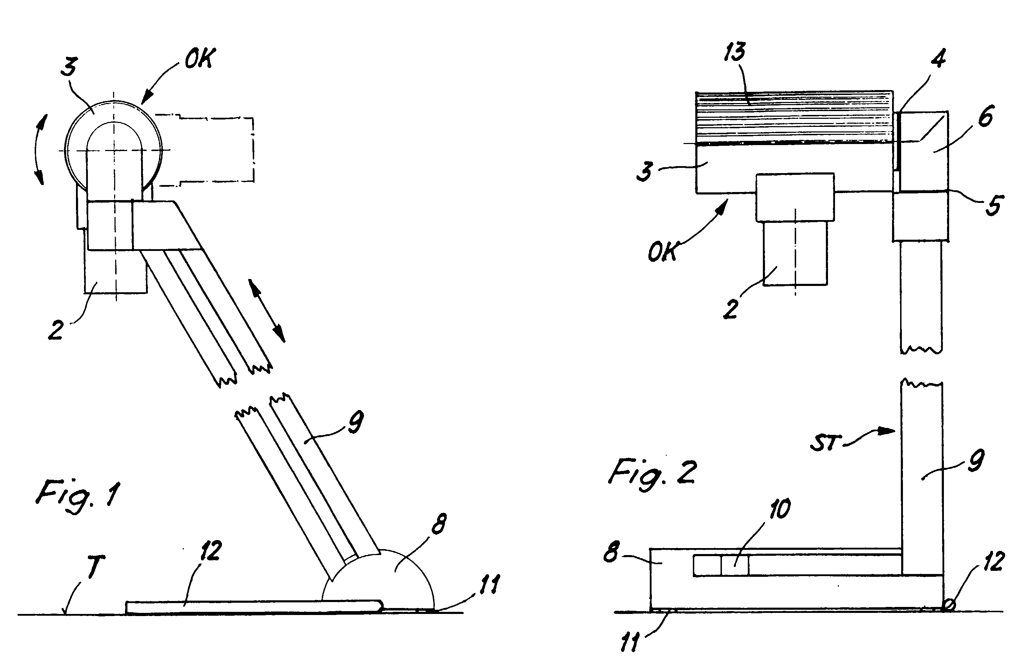

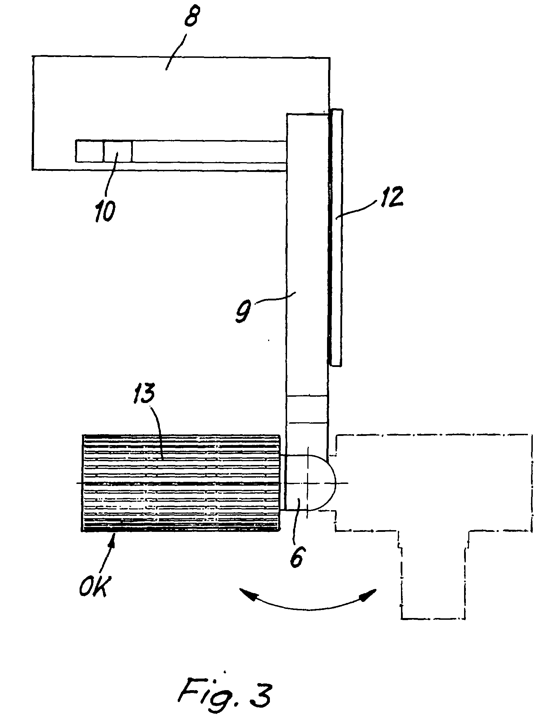

Die Fig. 1 bis 3 zeigen in verschiedenen Ansichten eine elektronische Objektkamera OK, wie sie als Zusatzgerät z.B. für Bildfernsprecher zum Einsatz kommt, um Dokumente, Gegenstände und Personen aufnehmen und übermitteln zu können. Die Kamera, von der nur das Objektiv 2 sichtbar ist, ist in einem zylindrischen Gehäuse 3 untergebracht, das auf der dem Objektiv abgewandten Hälfte der Mantelfläche mit einer achsparallelen Riffelung 13 versehen ist, welche die Handhabung erleichtert. An der einen Stirnseite ist das Gehäuse 3 mit einem Gelenk 4 verbunden, so daß das Gehäuse um seine Achse gedreht werden kann. Dieses Gelenk 4 ist wiederum mit einem weiteren Gelenk 5, dessen Drehachse vertikal gerichtet ist, in einem Gelenkkopf 6 zusammengefaßt. Dadurch kann die Objektkameta OK praktisch in jede Richtung gedreht werden. Die Bewegungsmöglichkeiten sind durch Pfeile angedeutet. Dargestellt ist ihre Ausrichtung in der Vertikalen, um z.B. ein auf dem Tisch T liegendes Papier aufzunehmen. Weitere Stellungen sind in Fig. 1 und Fig. 3 durch strichpunktierte Linien angedeutet. In den Gelenken 4 und 5 können Rastmittel vorgesehen werden, die das Einstellen bestimmter, häufig wiederkehrender Kämerastellungen erleichtern. Ebenso können durch nicht dargestellte Anschläge die Drehwinkel in den Gelenken 4 und 5 begrenzt werden, was im Hinblick auf die elektrischen Leitungen zweckmäßig ist, um deren Verdrillen in Grenzen zu halten.

Der Gelenkkopf 6 sitzt auf einem Ständer ST, der aus einem Fuß 8 und einem Ständerholm 9, der den Gelenkkopf mit dem Fuß verbindet, besteht. Der Fuß 8 ist ein liegender Halbzylinder, in dem Bedienelemente 10 untergebracht sind. Die ebene Standfläche ist mit Gummifüßen 11 versehen. Der Ständerholm 9 ist geneigt, er schließt mit der Horizontalen einen Winkel von ungefähr 60° ein. Er wird von zwei parallelen Rohren gebildet, die seitlich am Fuß 8 enden, so daß dieser auf der gleichen Seite des Ständers ST liegt wie die Objektkamera OK. Der Ständerholm 9 kann teleskopartig verkürzt bzw. verlängert werden. Der Fuß 8 ist so schwer, daß die Objektkamera trotz des geneigten Ständerholmes 9 fest steht. Bei Bedarf kann der Fuß 8 mit einer Klemmvorrichtung zum Befestigen an einer Tischkante ausgerüstet werden (nicht dargestellt). An der einen Stirnseite des Fußes 8, zweckmäßig auf der gleichen Seite, auf der der Ständerholm 9 liegt, ist ein Anlegelineal 12 für Dokumente befestigt, das senkrecht zur Achse des Halbzylinders verläuft. Es ist als Stab ausgeführt und erleichtert das richtige Auflegen eines bestimmten Papierformates unter der Objektkamera OK.

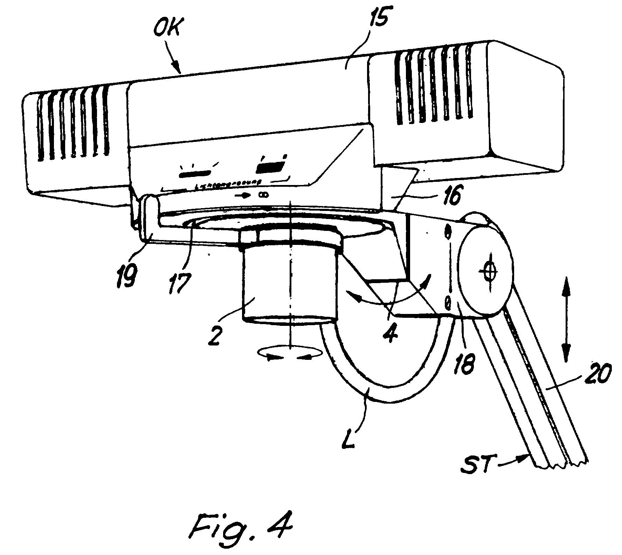

In Fig. 4 ist eine andere Ausführung der Objektkamera OK abgebildet. Das Gehäuse 15 hat annähernd quaderförmige Gestalt, aus dem auf einer Breitseite ein etwa zylindrischer Ansatz 16 vorspringt, in dem das Objektiv angeordnet ist. Die Stirnseite dieses Ansatzes 16 enthält rund um das Objektiv 2 eine Lagerung als Gelenk 17, dessen Drehachse parallel zur Objektivachse verläuft oder mit ihr zusammenfällt. Von diesem Gelenk 17 führt ein Arm 18 zum Kopf des Ständers ST. Der Arm ist geteilt und enthält ein Gelenk 4, dessen Achse quer zu der des Gelenkes 17, also waagerecht verläuft. Von dem Ständer ST ist nur das obere Ende angedeutet, weil es sich um ein an sich bekanntes Hebelgetriebe handelt, wie es für Lampen üblich ist, die z.B. an einem Tisch befestigt werden können. Solche Hebelgetriebe sind als Parallelogramm-Tragarme derart ausgebildet, daß beim Bewegen ein an seinem Kopf angebrachter Gegenstand nur seinen Abstand, aber nicht seine waagerechte Stellung bezüglich der Unterlage (Tisch), an der das Hebelgetriebe befestigt ist, verändert.

Somit kann die Objektkamera sowohl in der Höhe verfahren als auch um zwei Raumachsen gedreht werden. Rastvorrichtungen in den Gelenken erleichtern wiederum das Einstellen bestimmter Stellungen wie bei der zuvor geschilderten Ausführung.

Am Objektiv 2 ist ein Stellhebel 19 befestigt, der über die Lagerung bzw. das Gelenk 17 herausragt und eine bequeme Einstellung der Entfernung am Objektiv ermöglicht. Die elektrischen Leitungen L der Objektkamera sind am Kopf des Ständers ST in die Holme 20 eingeführt. Über den Griffbereich auf dem Gehäuse 15 der Objektkamera ist ein Benutzer in der Lage, diese mit einer Hand in einer Bewegung in jede gewünschte Stellung zu bringen. Das unmittelbar darunter angeordnete Handhabungsfeld ermöglicht gleichzeitig auch alle kameraspezifischen Einstellungen wie Schärfe und Weißabgleich.

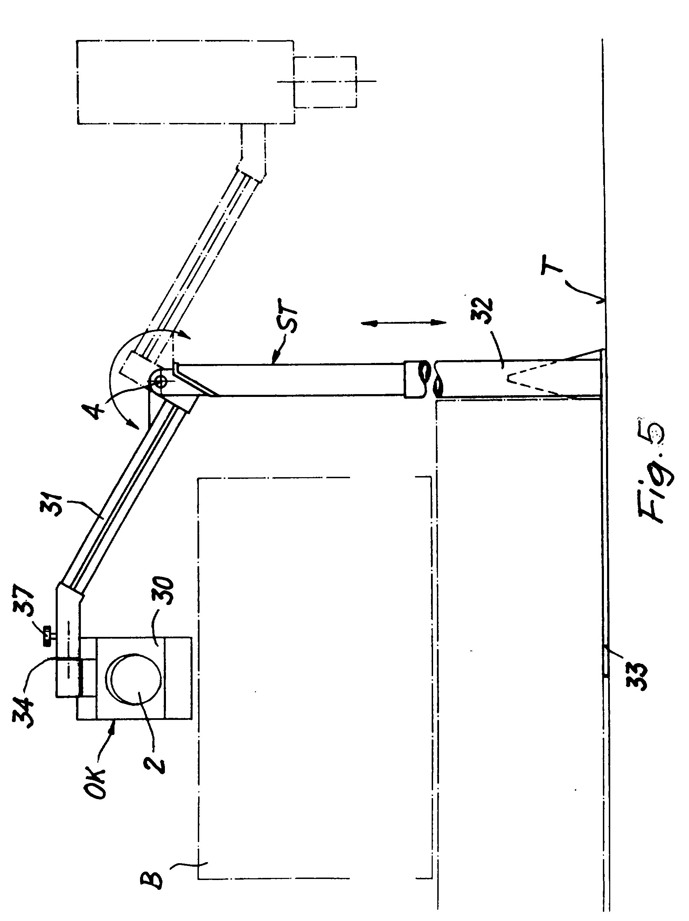

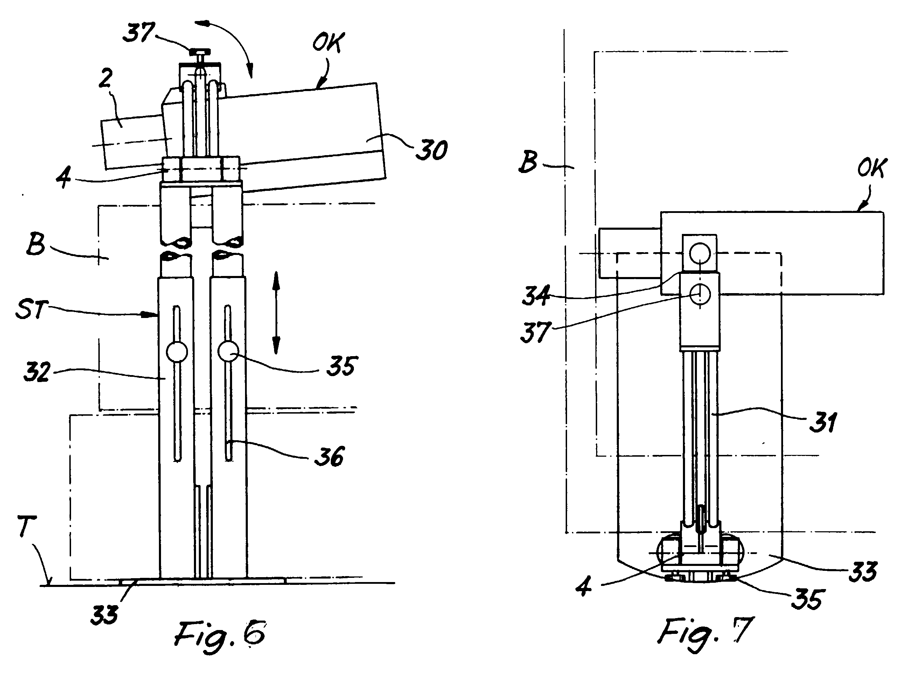

Die Fig. 5 bis 7 zeigen eine weitere Ausführung einer Objektkamera OK mit einem Ständer ST, der teleskopartig in der Höhe verstellbar ist und einen schwenkbaren Arm 31 hat. Der Arm 31 ist mit dem einen Ende an einem um eine waagerechte Achse drehbaren Gelenk 4 befestigt, das auf zwei parallelen, rohrförmigen Ständerholmen 32 sitzt. Die Ständerholme 32 bestehen jeweils aus zwei ineinander gleitenden Rohren, die mit Hilfe von Spannschrauben 35 feststellbar sind, welche jeweils einen Schlitz 36 im äußeren Rohr durchsetzen und in das innere geschraubt sind (Fig. 6). Die Länge der Schlitze 36 bestimmt die Stellhöhe des Ständers ST. Beim Festdrehen der Spannschrauben 35 werden die inneren gegen die äußeren Rohre verspannt und festgelegt. Die Ständerholme 32 stehen auf einem flachen, plattenförmigen Fuß 33, der auf einer Stellfläche (Tisch) T so unter ein Bildwiedergabegerät B, das strichpunktiert angedeutet ist, geschoben werden kann, daß die Objektkamera OK über dem Bildschirm auf einen Benutzer gerichtet ist.

Am freien Ende des Armes 31 ist ein zweites Gelenk 34 angebracht, dessen Drehachse zu der des anderen Gelenkes 4 senkrecht steht. Dadurch kann die Objektkamera OK theoretisch um 360° geschwenkt werden wobei sich die Achse des Objektivs 2 in einer Ebene senkrecht zur Drehachse des Gelenkes 34 bewegt. Das Feststellen in der gewünschten Stellung geschieht wieder mittels Spannschraube 37. Als Spannschrauben können übliche Rändel- oder Knebelschrauben verwendet werden. Die Befestigung der Objektkamera OK am Kopf des Gelenkes 34 kann in der gleichen Weise erfolgen.

In Fig. 5 ist strichpunktiert eine zweite Endstellung eingezeichnet, in der die Objektkamera OK nach unten auf den Tisch T zur Aufnahme von Dokumenten oder dergleichen gerichtet ist. Die Objektkamera wird dabei sowohl um das Gelenk 4 als auch um das Gelenk 34 geschwenkt. Die Bewegungsmöglichkeiten sind in den Fig. 5 bis 7 durch Richtungspfeile angedeutet.

## Patentansprüche

1. Elektronische Objektkamera (OK) mit einem Gehäuse (15), das mittels eines um eine waagerechte Achse drehbaren Gelenkes (4) an einem Ständer (ST) befestigt ist,
**dadurch gekennzeichnet**, daß am Gehäuse (15) ein weiteres Gelenk (17) in Form einer etwa konzentrisch zum Objektiv (2) der Kamera angeordneten Lagerung angebracht ist, dessen Drehachse senkrecht auf der des Gelenkes (4) steht, welches in einem den Ständer (ST) mit der Lagerung verbindenden Arm (18) enthalten ist.

2. Objektkamera nach Anspruch 1, dadurch gekennzeichnet, daß das Gehäuse (15) im wesentlichen ein gestreckter Quader ist, aus dessen einer Breitseite ein Ansatz (16) mit der Lagerung (17) vorspringt und daß am Objektiv (2) ein die Lagerung überragender Stellhebel (19) befestigt ist.

3. Objektkamera nach Anspruch 1, dadurch gekennzeichnet, daß der Ständer (ST) ein an sich bekanntes Hebelgetriebe mit Klemm- oder Schraubfuß ist.

4. Elektronische Objektkamera (OK) mit einem Gehäuse (30), das mittels eines um eine waagerechte Achse drehbaren Gelenkes (4) an einem Ständer (ST) befestigt ist,
**dadurch gekennzeichnet**, daß ein aus zwei parallelen Rohren (32) gebildeter, schwenkbarer Arm (31) das Gehäuse (30) und das Gelenk (4) verbindet, und daß das Gehäuse (30) mittels eines weiteren Gelenkes (34), dessen Achse senkrecht zu der des anderen Gelenkes (4) verläuft, an dem Arm (31) befestigt ist und daß der teleskopartig verstellbare Ständer (ST) einen Fuß (33) hat, der mit dem Gelenk (4) durch einen Ständerholm (32) verbunden ist.

5. Elektronische Objektkamera (OK) mit einem Gehäuse (3), das mittels eines um eine waagerechte Achse drehbaren Gelenkes (4) an einem Ständer (ST) befestigt ist, wobei zwischen das Gelenk (4) und den Ständer (ST) ein weiteres, um eine senkrechte Achse drehbares Gelenk (5) eingefügt ist und der Ständer (ST) einen Fuß (8) hat, der mit dem Gelenk (5) durch einen Ständerholm (9) verbunden ist, dadurch gekennzeichnet, daß beide Gelenke (4, 5) in einem gemeinsamen Gelenkkopf (6) zusammengefaßt sind, und daß das Gehäuse (3) der Kamera ein Zylinder ist, dessen Achse senkrecht zur Achse des Objektivs der Kamera (2) verläuft und der um annähernd 360° drehbar ist.

6. Objektkamera nach Anspruch 1, 4 oder 5, dadurch gekennzeichnet, daß die Gelenke (4, 5, 17, 34) teilweise oder sämtlich Rastmittel für Zwischenstellungen und Anschläge für die Endstellung haben.

7. Objektkamera nach Anspruch 5, dadurch gekennzeichnet, daß der Fuß (8) des Ständers (ST) ein liegender Halbzylinder ist, an dessen einer Stirnseite rechtwinklig zu seiner Achse ein Anlegelineal (12) angebracht ist.

## Claims

1. Electronic camera (OK), having a housing (15) which is fastened to a stand (ST) by means of a joint (4) which is rotatable about a horizontal axis,
characterized in that mounted on the housing (15) is a further joint (17) in the form of a bearing, which is disposed substantially concentrically relative to the lens (2) of the camera and whose axis of rotation is at right angles to that of the joint (4), which is contained in an arm (18) connecting the stand (ST) to the bearing.

2. Camera according to claim 1, characterized in that the housing (15) is substantially an elongated cuboid, from one broad side of which a projection (16) comprising the bearing (17) projects, and that an adjusting lever (19) projecting beyond the bearing is fastened to the lens (2).

3. Camera according to claim 1, characterized in that the stand (ST) is a known lever mechanism with a clamped or screwed foot.

4. Electronic camera (OK), having a housing (30) which is fastened to a stand (ST) by means of a joint (4) which is rotatable about a horizontal axis,
characterized in that a swivel arm (31) formed by two parallel tubes (32) connects the housing (30) and the joint (4), and that the housing (30) is fastened to the arm (31) by means of a further joint (34), the axis of which extends at right angles to that of the other joint (4), and that the telescopically adjustable stand (ST) has a foot (33) which is connected to the joint (4) by a stand post (32).

5. Electronic camera (OK), having a housing (3) which is fastened to a stand (ST) by means of a joint (4) which is rotatable about a horizontal axis, a further joint (5) which is rotatable about a vertical axis being inserted between the joint (4) and the stand (ST) and the stand (ST) having a foot (8) which is connected to the joint (5) by a stand post (9), characterized in that both joints (4, 5) are combined in a common joint head (6), and that the housing (3) of the camera is a cylinder, the axis of which extends at right angles to the axis of the camera lens (2) and which is rotatable through approximately 360°.

6. Camera according to claim 1, 4 or 5, characterized in that the joints (4, 5, 17, 34) in part or in whole have detent means for intermediate positions and stops for the end position.

7. Camera according to claim 5, characterized in that the foot (8) of the stand (ST) is a horizontally disposed half cylinder, at one end face of which a feed guide (12) is provided at right angles to the axis of said half cylinder.

## Revendications

1. Caméra élcctronique à champ d'objet (OK) comportant un boîtier (15) qui est fixé à un statif (ST) au moyen d'une articulation (4) pouvant tourner autour d'un axe horizontal,
caractérisée par le fait que sur le boîtier (15) est rapportée une autre articulation (17) sous forme d'une portée disposée à peu près concentriquement à l'objectif (2) de la caméra dont l'axe de rotation est perpendiculaire à celui de l'articulation (4) contenue dans un bras (8) reliant le statif (ST) à la portée.

2. Caméra selon la revendication 1, caractérisée par le fait que le boîtier (15) est sensiblement un parallélogramme de forme allongée, de l'un des grands côtés duquel vient en saillie un appendice (16) contenant la portée (17) et qu'à l'objectif (2) est fixé un levier de mise au point (19) qui déborde de la portée.

3. Caméra selon la revendication 1, caractérisée par le fait que le statif (ST) est un mécanisme à levier connu en soi, avec un pied bridé ou vissé.

4. Caméra électronique à champ d'objet (OK) comportant un boîtier (30) qui est fixé à un statif (ST) au moyen d'une articulation (4) pouvant tourner autour d'un axe horizontal,
caractérisée par le fait qu'un bras pivotant (31, formé de deux tubes parallèles (32), relie le boîtier (30) et l'articulation (4) et que le boîtier (30) est fixé au bras (31) au moyen d'une autre articulation (34) dont l'axe est orienté perpendiculairement à celui de l'autre articulation (4) et que le statif (C), réglable télescopiquement, présente un pied (33) qui est relié à l'articulation (4) par un jambage (32) du statif.

5. Caméra électronique à champ d'objet (OK) comportant un boîtier (3) qui est fixé à un statif (ST) au moyen d'une articulation (4) pouvant tourner autour d'un axe horizontal, dans laquelle, entre l'articulation (4) et le statif (ST), est insérée une autre articulation (5) qui peut tourner autour d'un axe vertical et dans laquelle le statif (ST) comporte un pied (8) qui est relié à l'articulation (5) par un jambage (9) du statif, caractérisée par le fait que les deux articulations (4, 5) sont regroupées dans une tête d'articulation commune (6) et que le boîtier (3) de la caméra est un cylindre dont l'axe est orienté perpendiculairement à l'axe de l'objectif de la caméra (2) et qui peut tourner sur environ 360°.

6. Caméra selon la revendication 1, 4 ou 5, caractérisée par le fait que les articulations (4, 5, 17, 34) présentent, partiellement ou totalement, des moyens de crantage pour des positions intermédiaires et des butées pour la position d'extrémité*.*

7. Caméra selon la revendication 5, caractérisée par le fait que le pied (8) du statif (ST) est un demi-cylindre placé horizontalement, à l'une des faces frontales duquel est rapportée, perpendiculairement à son axe, une règle d'appui (12).
